# EUROPÄISCHE PATENTSCHRIFT

(11) **EP 3 183 072 B1**
(45) Veröffentlichungstag und Bekanntmachung des Hinweises auf die Patenterteilung: **03.10.2018**
(21) Anmeldenummer: 15759420.1
(22) Anmeldetag: 19.08.2015
(51) Int. Cl.: B07C 5/02, B07C 5/342

(54) **SORTIERANLAGE UND VERFAHREN ZUR TRENNUNG VON MATERIALFRAKTIONEN**
SORTUNG DEVICE AND METHOD FOR SORTING OF MATERIAL FRACTIONS
DISPOSITIF ET PROCÉDÉ DE TRI DU MATÉRIAU EN FRACTIONS

(30) Priorität: 20.08.2014 DE 102014111871
(43) Veröffentlichungstag der Anmeldung: 28.06.2017
(73) Patentinhaber: Unisensor Sensorsysteme GmbH, 76149 Karlsruhe (DE)
(72) Erfinder: BOHLEBER, Jürgen, 77815 Bühl-Neusatz (DE); SCHMIDT, Alfred, 76356 Weingarten (DE)
(74) Vertreter: Lemcke, Brommer & Partner Patentanwälte Partnerschaft mbB
(86) Internationale Anmeldenummer: PCT/EP2015/069081
(87) Internationale Veröffentlichungsnummer: WO 2016/026908

(56) Entgegenhaltungen:
- WO-A1-2005/018835

## Beschreibung

Die vorliegende Erfindung betrifft eine Vorrichtung und ein entsprechendes Verfahren zur Trennung einer oder mehrerer Materialfraktionen aus mindestens einem Materialstrom rieselfähigen Schüttgutes.

Ein solches Verfahren bzw. eine entsprechende Vorrichtung werden unter anderem zur Sortierung von Materialgemischen zum Zwecke des Recyclings, insbesondere von Kunststoffen, eingesetzt. Das zu sortierende Materialgemisch besteht hierbei aus zu Bruchstücken zerkleinertem Recyclinggut wie etwa Getränkeflaschen, Lebensmittelverpackungen oder anderen Kunststoffgegenständen bspw. aus Elektronikaltgeräten oder der Verwertung von Automobilen. Die einzelnen in dem Materialgemisch enthaltenen Bruchstücke müssen hierbei nach ihrer Kunststoffart und gegebenenfalls weiteren Eigenschaften wie Farbe, Verschmutzungsgrad oder ähnlichem sortiert werden, um hieraus sortenreine, recyclingfähige Materialfraktionen zu gewinnen.

Ein Materialstrom des zu sortierenden Materialgemisches wird hierbei optisch abgetastet und einer spektroskopischen Erkennung unterzogen. Die einzelnen in dem Materialstrom enthaltenen Bruchstücke werden dann anhand ihrer so detektierten Materialeigenschaften mechanisch separiert, indem diese selektiv in unterschiedliche Selektionskanäle abgelenkt werden.

Aus der Schrift DE 198 16 881 sind ein Verfahren und eine entsprechende Vorrichtung zur Trennung von Kunststoffen bekannt, bei dem ein Materialstrom der zu Bruchstücken zerkleinerten Kunststoffe auf einem Transportband befördert wird. Der Materialstrom wird hierbei senkrecht zur Transportrichtung mit einem Laserstrahl zeilenförmig abgetastet und die von den Bruchstücken remittierte optische Strahlung spektroskopisch analysiert. Aufgrund der Erkennungsergebnisse werden die einzelnen Bruchstücke in verschiedene Gruppen klassifiziert und durch ein Separationssystem beispielsweise über getaktete Düsen in getrennte Fraktionen separiert.

Die Schrift DE 101 49 505 zeigt eine Sortiereinrichtung für Kunststoffe bei dem ein Materialstrom aus Kunststoffbruchstücken unter Schwerkrafteinwirkung über eine schiefe Ebene geführt wird. Auf dem Weg entlang der schiefen Ebene wird der Materialstrom mit einem optischen Spektrometer analysiert und die einzelnen Bruchstücke am Ende der schiefen Ebene über eine mit Düsenstrahlen betriebene Separationseinheit in mindestens zwei Materialfraktionen getrennt.

In der WO 2005/018835 A1 wird eine Sortieranlage gezeigt, bei der ein Materialstrom über ein konisches Verteilschild unter Schwerkrafteinwirkung zu einem ringförmigen Teilchenstrom vereinzelt wird. Unterhalb des Verteilschilds befindet sich eine optische Abtasteinrichtung mit einem rotierenden Spiegel, mit der der Materialstrom in einer Abtastebene optisch abgetastet wird. Ein optischer Detektor erkennt typische Muster bzw. Signaturen von Teilchen. Unterhalb der Abtastebene sind ringförmig Luftdüsen angeordnet, mit denen entsprechend erkannte Materialteilchen aus ihrer Flugbahn abgelenkt werden.

Ein Nachteil der im Stand der Technik bekannten Sortieranlagen besteht darin, dass mit diesen nur einen relativ niedrigen Materialdurchsatz erreicht werden kann. So lässt sich einerseits bei einer Sortieranlage mit mechanischem Transportband die Bandgeschwindigkeit nicht beliebig erhöhen bzw. führt eine höhere Bandgeschwindigkeit zu erhöhtem Bandverschließ. Bei der Verwendung einer schiefen Ebene begrenzt die gegenseitige Überlappung der Bruchstücke, die zu schlechten bzw. fehlerhaften Sortierergebnissen führen würde, den Massenstrom, mit dem die schiefe Ebene beschickt werden kann. Der Massendurchsatz ist damit durch die geometrischen Abmessungen der schiefen Ebene beschränkt. Außerdem führt bei optischer Abtastung der Bruchstücke der unterschiedliche Abstand zwischen Scanner und Bruchstück zu einem "Tangensfehler" beim Scannen.

Um die für einen wirtschaftlichen Betrieb erforderlichen großen Massenströme bei einer Anwendung zum Recycling von Kunststoffen aus beispielsweise Elektronikaltgeräten oder Automobilen bewältigen zu können, besteht eine Aufgabe der Erfindung darin, eine Vorrichtung und ein Verfahren der eingangs genannten Art anzugeben, mit dem ein höherer Materialdurchsatz bzw. eine höhere Sortiergeschwindigkeit erreicht werden kann. Die Aufgabe wird hinsichtlich der Vorrichtung gelöst durch die Merkmale des Anspruchs 1 und hinsichtlich des Verfahrens durch die Merkmale des Anspruchs 14.

Erfindungsgemäß wird bei einer Vorrichtung zur Trennung einer oder mehrerer Materialfraktionen aus mindestens einem Materialstrom rieselfähigen Schüttgutes, welche eine Leiteinrichtung, über die der Materialstrom unter Schwerkrafteinwirkung geführt wird, eine optische Abtasteinrichtung zur spektroskopischen Erkennung von zusammensetzungs- oder beschaffenheitsabhängigen Eigenschaften einzelner in dem Materialstrom enthaltener Bruchstücke, und eine Separationseinrichtung zur mechanischen Separierung der einzelnen in dem Materialstrom enthaltenen Bruchstücke in Abhängigkeit von Erkennungsergebnissen der optischen Abtasteinrichtung aufweist, die Aufgabe dadurch gelöst, dass die Leiteinrichtung als Mantelfläche eines sich nach unten hin ausweitenden dreidimensionalen Rotationskörpers oder Pyramidenstumpfes ausgebildet ist und dass die optische Abtasteinrichtung in der axialen Projektion des dreidimensionalen Rotationskörpers bzw. Pyramidenstumpfes innerhalb dessen Grundfläche angeordnet ist. Oberhalb der Leiteinrichtung sind mehrere sektorförmige Silos angeordnet, aus denen Materialströme getrennt über die Leiteinrichtung geführt werden. Für jedes der Silos sind unterhalb der Leiteinrichtung zwei oder mehr entsprechende, auf unterschiedlichen Radien von der Achse des Rotationskörpers bzw. Pyramidenstumpfes angeordnete Selektionskanäle vorgesehen. Die Leiteinrichtung weist im Wesentlichen vertikal verlaufende Trennstege zur Trennung unterschiedlicher Materialströme auf ihrem Weg entlang der Leiteinrichtung auf. Auf diese Weise kann die Sortieranlage gleichzeitig mit unterschiedlichen Materialgemischen beschickt werden bzw. unterschiedliche Materialfraktionen aus den von den einzelnen Silos kommenden Materialströmen aussortieren. So kann beispielsweise aus einem Materialstrom PET, aus einem anderen PP heraus sortiert und einem Recycling zugeführt werden.

Indem für die Leiteinrichtung anstelle einer zweidimensionalen, im Wesentlichen bandförmigen Geometrie die Mantelfläche eines sich nach unten aufweitenden dreidimensionalen Körpers gewählt wird, kann die effektive Nutzfläche für den Transport, die Vereinzelung und die Analyse der Bruchstücke eines Materialstroms bei gleicher Größe der Anlage erheblich gesteigert werden. Indem außerdem die optische Abtasteinrichtung innerhalb der Grundfläche des dreidimensionalen Körpers angeordnet wird, kann durch rotationsförmige optische Abtastung der gesamte sich rings um die Abtasteinrichtung in Fallrichtung vorbei bewegende Materialstrom erfasst werden. Der Materialstrom bzw. die Materialströme werden somit von innen heraus optisch abgetastet. Dies ermöglicht einen wesentlich höheren Massendurchsatz als bei bisherigen Anlagen und wegen des geringen Abstandes zwischen Scanner-Optik und Messobjekt gleichzeitig sehr gute optische Erkennungsergebnisse bzw. eine Erkennung mit niedriger Fehlerrate. Die Abtastung mittels eines rotierenden Abtaststrahls ermöglicht dabei ein kontinuierliches Scannen, bei dem ringsum alle Messungen gleich ausgeführt werden.

Die optische Abtasteinrichtung umfasst eine Lichtquelle zur Erzeugung eines Lichtstrahls und ein rotierendes optisches Ablenkelement, welches angeordnet ist, den Lichtstrahl derart abzulenken, dass dieser den von der Leiteinrichtung verteilten Materialstrom unterhalb der Vereinzelungseinrichtung in einer vorzugsweise zur Grundfläche des Rotationskörpers bzw. Pyramidenstumpfes parallelen Abtastebene schneidet. Somit wird durch einen rotierenden Lichtstrahl innerhalb einer Abtastebene eine optische Abtastung über volle 360° realisiert. Durch die der kreisenden Bewegung des Abtaststrahls überlagerte Fallbewegung der Bruchstücke entsteht eine spiralförmige Abtastung des herabfallenden Materialstroms. Durch geeignete Wahl der Rotationsgeschwindigkeit kann die Abtastfrequenz an Fall- bzw. Rutschgeschwindigkeit und Teilchengröße der Bruchstücke angepasst werden.

Wenn das optische Ablenkelement um die Achse des Rotationskörpers bzw. Pyramidenstumpfes rotierend angeordnet ist und den Lichtstrahl aus der Achse des Rotationskörpers bzw. Pyramidenstumpfes in die Abtastebene ablenkt, lassen sich bestmögliche Abtastergebnisse erreichen, da der Lichtweg vom Ablenkelement zu den herabfallenden Bruchstücken für alle Drehwinkel gleichlang ist.

Außerdem kann im Lichtweg zwischen Lichtquelle und rotierendem optischen Ablenkelement ein Strahlteiler vorgesehen sein, welcher in Rückrichtung über das Ablenkelement vom Materialstrom zurückgestrahltes Fluoreszenz- und Streulicht zu einer spektroskopischen Auswerteinrichtung ablenkt. Auf diese Weise lässt sich ein sehr kompakter Aufbau erzielen, da die Lichtwege von der Lichtquelle bis zum abzutastenden Materialstrom und zurück zur spektroskopischen Auswerteinrichtung größtenteils zusammenfallen. Außerdem kann in beide Richtungen dieselbe Optik zum Fokussieren bzw. Kollimieren des Lichtes in Hin- bzw. Rückrichtung verwendet werden.

Darüber hinaus ist es vorteilhaft, wenn im Lichtweg eine optische Fokussiereinheit vorgesehen ist, welche den Lichtstrahl auf eine Kreislinie fokussiert, in der dieser den Materialstrom schneidet.

Das Schüttgut, welches über die Leiteinrichtung geführt werden soll, kann in ein oder mehrere oberhalb der Leiteinrichtung angeordnete Silos eingefüllt werden. Ein oder auch mehrere Vibrationsförderer, welche sich vorzugsweise unterhalb des/der Silos befinden und diesem/n zugeordnet ist, dienen dazu, das Schüttgut dosiert der Leiteinrichtung zuzuführen, um den Materialstrom zu erzeugen. Alternativ zu der Verwendung von Vibrationsförderern kann auch an andere Arten der Förderung aus dem oder den Silos, beispielsweise mittels Förderschnecken gedacht werden.

Vorzugsweise wird die Separationseinrichtung durch eine Vielzahl entlang einer Umfangslinie unterhalb der Leiteinrichtung angeordnete, selektiv über entsprechende Ventile ansteurbare Druckluftdüsen gebildet, um die einzelnen in dem Materialstrom enthaltenen Bruchstücke mittels Druckluftstößen abzulenken. Beispielsweise können die Druckluftdüsen so angesteuert werden, dass alle unerwünschten "Schlechtstoffe" abgelenkt, sozusagen herausgeblasen werden und in einem Selektionskanal auf einem größeren Durchmesser von der Achse der Leiteinrichtung aus gesehen landen, während die erwünschten als "Gutstoffe" erkannten Bruchstücke aus dem Materialstrom nicht abgelenkt, geradlinig in einen entsprechenden Selektionskanal fallen. Durch Druckluftstöße aus unterschiedlichen Richtungen, beispielsweise nach vorne und nach hinten, ist es auch möglich, unterschiedliche Materialfraktionen gleichzeitig aus dem Materialstrom heraus zu trennen und in unterschiedliche Selektionskanäle abzulenken.

Vorteilhaft wird die optische Abtasteinrichtung zur Erkennung und Unterscheidung von Bruchstücken einer Teilchengröße bis 200 mm ausgebildet, wobei auch Bruchstücke kleiner als 5 mm erkannt werden können. Indem so besonders große Bruchstücke bis etwa 200 mm zugelassen werden, kann der Materialdurchsatz der üblichen Sortieranlage gegenüber Anlagen, die Bruchstücke einer Größe von etwa 20 mm sortieren, erheblich erhöht werden.

Die Sortiergenauigkeit der Sortieranlage hängt unter anderem auch von der Rotationsgeschwindigkeit des optischen Ablenkelements ab. Je höher diese gewählt werden kann, umso enger kann die Spirale der Messungen, mit der der Materialstrom abgetastet wird, ausfallen. Bei einer bevorzugten Ausbildung der Erfindung weist das rotierende optische Ablenkelement einen Antrieb auf, welcher ausgebildet ist, das Ablenkelement mit einer Frequenz vom mehr als 2000 Umdrehungen pro Minute, vorzugsweise mehr als 5.000 Umdrehungen pro Minute und höchstvorzugsweise mit einer Frequenz von bis zu 15.000 Umdrehungen pro Minute anzutreiben. Um hierbei die Lager von Antrieb und Ablenkelement nicht übermäßig zu strapazieren, sollten die rotierenden Bauteile des Antriebs und das Ablenkelement so ausgebildet bzw. ausgewuchtet sein, dass sie keine Unwuchten ausweisen.

Besonders gute Erkennungsergebnisse werden im Rahmen der vorliegenden den Erfindung durch die Verwendung von Mehrlinienlasern oder kollinearen Laserlichtbündeln unterschiedlicher Wellenlängen erzielt. Besonders bevorzugt wird ein mittels Frequenzvervielfachung aus dem Laserlicht einer Laserlichtquelle erzeugter Lichtstrahl mit vorzugsweise drei Wellenlängen verwendet, wobei mindestens eine Abtastwellenlänge im Ultraviolettbereich liegt. Die Verwendung mehrerer Wellenlängen vor allem im UV-Bereich liefert besonders gute Erkennungsergebnisse aufgrund der hohen Energie der einzelnen Lichtquanten, mit denen auch höhere Energieniveaus des bestrahlten Materials angeregt werden können. Außerdem können mit den genannten Wellenlängen auch Bruchstücke aus schwarzem Material sortiert werden.

Bei einer bevorzugten Ausführungsform kommt Laserlicht aus einem YAG-Laser zum Einsatz, aus dessen Laserlicht durch Frequenzvervielfachung mittels entsprechender optischer Kristalle drei verschiedene Abtastwellenlängen im grünen und UV-Bereich erzeugt werden. Als Abtastwellenlängen haben sich die Wellenlängen 532 nm, 354 nm und 266 nm bewährt, die sich durch Frequenzverdopplung, Frequenzverdreifachung und Frequenzvervierfachung aus der Grundwellenlänge eines YAG Lasers von 1064 nm erzeugen lassen.

Weitere vorteilhafte Weiterbildungen und Vorteile der Erfindung werden anhand der Ausführungsbeispiele und der beigefügten Zeichnungen beschrieben. Hierbei zeigt:
- Figur 1: eine isometrische Ansicht einer rotationssymmetrischen Sortieranlage mit kegelstumpfförmiger Leiteinrichtung;
- Figur 2: eine Seitenansicht der Sortieranlage aus Figur 1;
- Figur 3: die Sortieranlage aus Figur 1 in einem Längsschnitt und
- Figur 4: eine Detailansicht der optischen Abtasteinrichtung mit einem rotierenden Ablenkelement.

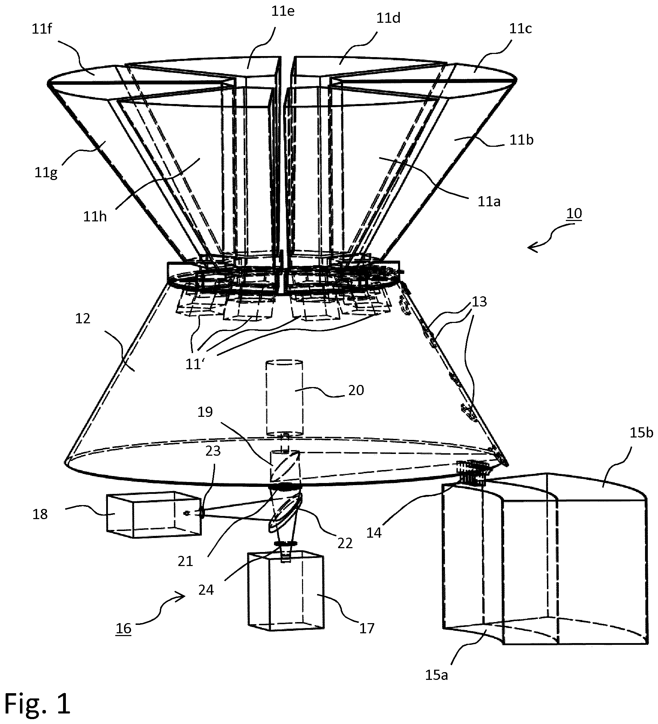

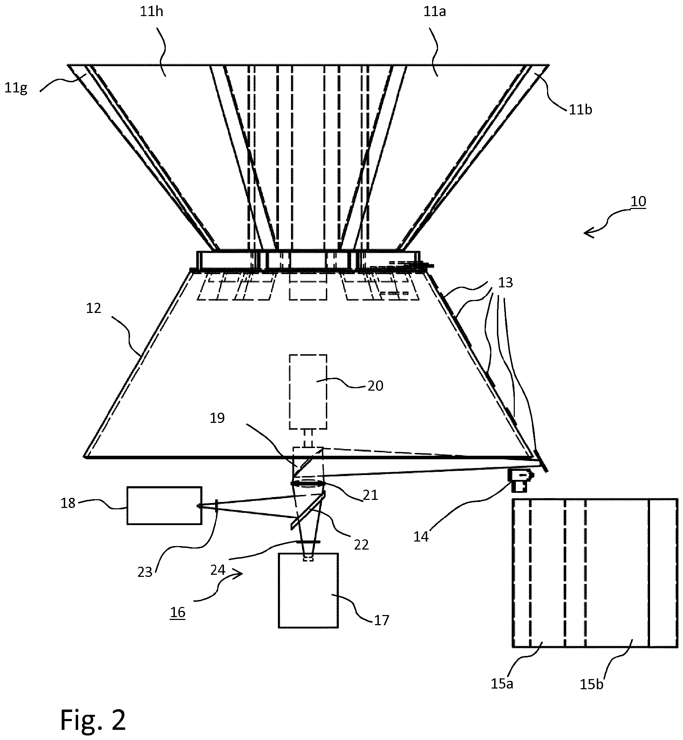

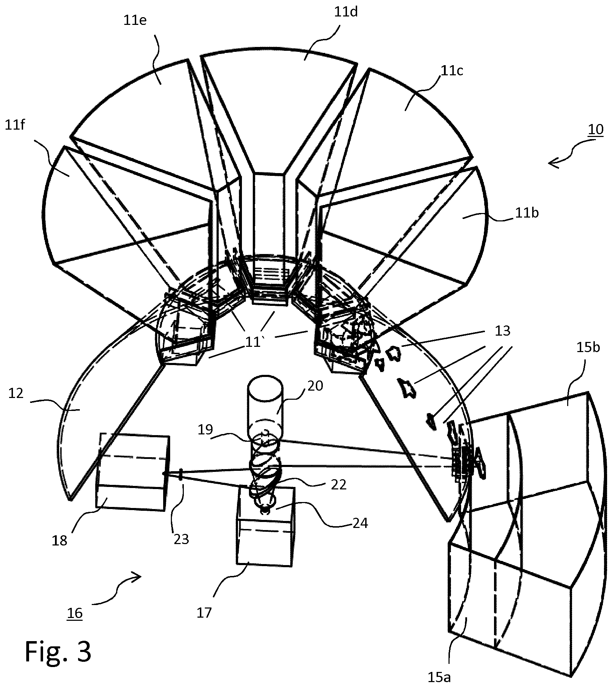

Die in den Figuren 1 bis 3 dargestellte Sortieranlage 10 weist im oberen Bereich acht sektorförmige Silos 11a bis 11h auf, welche mit zu sortierendem, zu Bruchstücken zerkleinertem Recyclinggut befüllt werden können. Unterhalb der sektorförmigen Silos 11a bis 11h ist eine rotationssymmetrische Leiteinrichtung 12 angeordnet, über welche das Recyclinggut aus den sektorförmigen Silos 11a bis 11h unter Schwerkrafteinwirkung nach unten gleitet. Die in die einzelnen Silos 11a bis 11h eingefüllten Bruchstücke des Recyclingmaterials werden hierbei an der Unterseite der Silos mit Hilfe von Vibrationsförderern 11' auf die schiefe Ebene der Leiteinrichtung 12 gelenkt. Jedem der Silos 11a bis 11h ist ein eigener Vibrationsförderer 11' zugeordnet. Die Vibrationsförderer 11' sind unterhalb der sektorförmigen Silos 11a bis 11h angeordnet und fördern das in das jeweilige Silo eingefüllte Recyclinggut dosiert auf die Leiteinrichtung 12. Die Fördermenge der Vibrationsförderer 11' ist einstellbar, so dass der jeweilige Materialstrom zur Optimierung von Massendurchsatz und Sortierergebnis, d.h. Minimierung von Fehlsortierungen, reguliert werden kann.

Die Leiteinrichtung 12 kann beispielsweise aus Edelstahlblech hergestellt sein und hat im Ausführungsbeispiel die Form eines sich nach unten aufweitenden Kegelstumpfes. Die einzelnen aus einem der Silos 11a bis 11h über die Leiteinrichtung 12 nach unten rutschenden Bruchstücke 13 bilden einen Materialstrom, der durch die sich nach unten hin aufweitende Form der Leiteinrichtung 12 auf seinem Weg nach unten aufgefächert und verteilt wird, wodurch die einzelnen Bruchstücke 13 vereinzelt werden. Die Leiteinrichtung 12 dient somit als Vereinzelungsfläche, wobei ein weiterer Vorteil der rotationssymmetrischen Form darin besteht, dass Bruchstücke in horizontaler und vertikaler Richtung vereinzelt werden können, nämlich horizontal durch den nach unten größer werdenden Durchmesser der Leiteinrichtung 12 und vertikal durch die Beschleunigung beim heruntergleiten.

Unterhalb der Leiteinrichtung 12 befinden sich eine Vielzahl in Umfangsrichtung verteilter Druckluftdüsen 14, die selektiv über entsprechende Ventile angesteuert werden können, um die einzelnen in dem Materialstrom enthaltenen Bruchstücke 13 nach Verlassen der Leiteinrichtung mittels Druckluftstößen selektiv abzulenken. Der besseren Übersicht wegen sind in Figur 1 nur einige wenige Druckluftdüsen 14 gezeigt, während sich tatsächlich die Reihe der Druckluftdüsen entlang der gesamten Umfangslinie unterhalb der Leiteinrichtung 12 fortsetzt.

Unterhalb der Luftdüsen 14 befinden sich auf unterschiedlichen Radien ringsegmentförmige Container 15a, 15b, welche als Selektionskanäle für die sortierten Bruchstücke 13 dienen. Soll beispielsweise ein Bruchstück 13 in den äußeren Container 15b sortiert werden, so wird es gezielt durch einen Druckluftstoß aus einer oder mehrerer der Druckluftdüsen 14 nach außen abgelenkt. Unterbleibt ein entsprechender Druckluftstoß, so fällt das betreffende Bruchstück gradlinig in den direkt unter der Leiteinrichtung 12 angeordneten, radial inneren Container 15a.

Im Ausführungsbeispiel sind nur zwei Selektionskanäle bzw. Container 15a, 15b vorgesehen, in welche die sortierten Bruchstücke 13 durch Druckluftstöße abgelenkt oder nicht abgelenkt gelangen können. Werden aber beispielsweise Luftdüsen vor und hinter dem herunterfallenden Materialstrom angebracht, so wäre es auch möglich, mehr als zwei ringsegmentförmige Selektionskanäle, um durch Ablenkung in unterschiedliche Richtungen zwei oder mehr unterschiedliche Materialfraktionen gleichzeitig aus dem Materialstrom heraussortieren zu können.

Zum besseren Verständnis sind in Figur 1 nur die zwei Container 15a, 15b gezeigt. Tatsächlich sind aber natürlich für jedes der acht sektorförmigen Silos 11a bis 11h entsprechende Selektionskanäle bzw. Container 15a, 15b vorhanden.

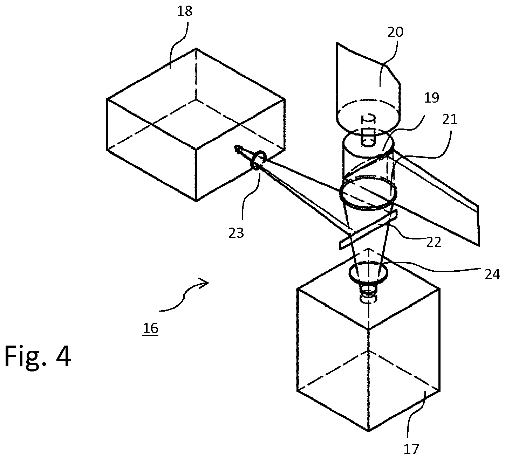

Die Erkennung der Materialzusammensetzung bzw. Materialeigenschaften der einzelnen Bruchstücke 13, anhand derer eine Entscheidung getroffen werden muss, in welchem der Selektionskanäle 15a, 15b ein Bruchstück sortiert werden soll, erfolgt mittels einer spektroskopischen Messung. Hierzu dient eine optische Abtasteinrichtung 16, welche in Figur 4 vergrößert dargestellt ist. Prinzip der Messung ist, dass die einzelnen Bruchstücke 13 von einer Lichtquelle 17 beleuchtet werden und dass von den einzelnen Bruchstücken reflektiertes und remittiertes Streulicht mit einem Prozessspektrometer 18 analysiert wird. Das Wellenlängenspektrum bzw. Frequenzspektrum des Streulichts gibt hierbei in der Art eines optischen Fingerabdrucks Auskunft über Materialbeschaffenheit und Zusammensetzung der jeweiligen Bruchstücke 13. Aus dem spektrometrischen Fingerabdruck lässt sich einerseits die Art des Materials, also z.B. PET, PE, PVC, PP oder dergleichen ermitteln. Daneben kann aber auch Art und Zusammensetzung einer Materialmischung ebenso wie eine Kontamination mit unerwünschten Stoffen wie etwa Ölen, Lacken, Harzen, Treibstoffen, Reinigungsmittel o.ä., sogenannte Kontaminanten, erkannt werden. Bestandteile des Materialstroms, die aufgrund ihrer Materialart, Zusammensetzung oder Kontamination unerwünscht sind, können somit aus dem Materialstrom aussortiert werden.

Die Wellenlänge des von der Lichtquelle 17 erzeugten Primärlichts liegt hierbei vorzugsweise im ultravioletten Bereich. Ein Teil des Primärlichts wird von den damit beleuchteten Bruchstücken 13 reflektiert, ein anderer Teil jedoch absorbiert und mit einem charakteristischen Fluoreszenzspektrum zu längeren Wellenlängen hin verschoben wieder remittiert. Daneben tritt auch Ramanstreuung auf und trägt zu dem charakteristischen Spektrum bei. Dieses Fluoreszenz- und Streuspektrum, welches von Materialeigenschaft und Zusammensetzung abhängt, wird in dem Spektrometer 18 analysiert. Als Lichtquelle 17 kann beispielsweise eine Quecksilberdampflampe oder vorzugsweise ein Laser verwendet werden. Auch die gleichzeitige Verwendung von zwei oder mehr diskreten Wellenlängen im Primärlicht kann vorteilhaft sein und zu verbesserten Erkennungsergebnissen führen. So können beispielsweise Mehrlinienlaser oder kollineare Laserlichtbündel unterschiedlicher Wellenlänge verwendet werden.

Bei einer bevorzugten Ausführungsform kommt Laserlicht aus einem YAG-Laser zum Einsatz, aus dessen Laserlicht durch Frequenzvervielfachung mittels entsprechender optischer Kristalle drei verschiedene Abtastwellenlängen im grünen und UV-Bereich erzeugt werden. Der im Ausführungsbeispiel verwendete YAG Laser erzeugt eine Grundwellenlänge von 1064 nm. Durch Frequenzverdopplung wird eine erste Abtastwellenlänge von 532 nm erzeugt; durch Frequenzverdreifachung eine zweite Abtastwellenlänge von 354 nm und durch Frequenzvervierfachung eine dritte Abtastwellenlänge von 266 nm. Die Laserlichtanteile dieser drei Wellenlängen werden als kollinearer Lichtstrahl von der Lichtquelle 17 ausgesendet. Die Verwendung mehrerer Wellenlängen vor allem im UV-Bereich liefert besonders gute Erkennungsergebnisse aufgrund der hohen Energie der einzelnen Lichtquanten, mit denen auch höhere Energieniveaus des bestrahlten Materials angeregt werden können. Auf diese Weise erzeugen auch Bruchstücke aus schwarzem Material, die mit herkömmlichen Abtastmethoden im Infrarotbereich nicht spektroskopisch erkannt werden konnten, einen eindeutigen spektrometrischen Fingerabdruck und können somit selektiert werden.

Im Ausführungsbeispiel wird von der Lichtquelle 17 ein Lichtstrahl erzeugt, der über ein rotierendes Ablenkelement 19 abgelenkt wird und den Materialstrom unterhalb der Leiteinrichtung 12 in einer horizontalen Abtastebene schneidet. Als Ablenkelement dient, ohne dass die Erfindung hierauf beschränkt wäre, ein schräg stehender Spiegel 19, der von einem Elektromotor 20 in Rotation versetzt wird. Die Lichteinfallsrichtung des Primärlichtstrahls ist hierbei entlang der Achse der kegelstumpfförmigen Leiteinrichtung 12. Der Spiegel 19 ist gegenüber der achsparallelen Richtung um etwa 45° geneigt und lenkt den Primärlichtstrahl um etwa 90° in die Abtastebene ab.

Im Lichtweg ist außerdem eine fokussierende Optik, beispielsweise eine Kollimatorlinse 21 angeordnet, welche den von der Lichtquelle 17 erzeugten Primärlichtstrahl auf eine Kreislinie fokussiert, in der die Abtastebene den Materialstrom schneidet. In Rückrichtung wird remittiertes Streulicht wieder über den Spiegel 19 in axiale Richtung abgelenkt, über die Kollimatorlinse 21 abgebildet und über einen im Strahlengang befindlichen dichroitischen Spiegel 22, der als Strahlteiler dient, horizontal zum Prozessspektrometer 18 abgelenkt.

Ablenkspiegel 19 und Antriebsmotor 20 bilden einen Rotationsscanner mit dem der Materialstrom in der Abtastebene von einem kreisförmig wandernden Lichtfleck optisch abgetastet wird. Durch die der kreisförmigen Lichtbewegung überlagerte Fallbewegung der Bruchstücke 13 entsteht eine spiralförmige Abtastung des entlang der Leiteinrichtung 12 heruntergleitenden bzw. fallenden Materialstroms. Die Rotationsgeschwindigkeit liegt hierbei vorzugsweise im Bereich von 8.000 bis 12.000 U/min. Der Massendurchsatz erreicht je nach Drehzahl des Scanners Werte bis zu 10 t /h.

Durch den rotierenden Spiegel 19 und den halbdurchlässigen Spiegel 22 wird erreicht, dass das von der Lichtquelle 17 kommende Primärlicht und das von den mit dem Primärlicht beleuchteten Bruchstücken remittierte Fluoreszenz- bzw. Streulicht gegenläufig dieselbe Optik 21 durchlaufen, so dass sich ein besonders einfacher kompakter Aufbau ergibt. Vor dem Spektrometer 18 kann noch ein optischer Filter 23 angeordnet sein, welches beispielsweise direktes Streulicht ausblendet, also Licht, das aus der Primärstrahlung der Lichtquelle 17 stammt und an den Oberflächen der Messobjekte reflektiert wird. Das optische Filter 23 ist daher so ausgebildet, dass es die Emissionswellenlänge bzw. Wellenlängen der Primärlichtquelle 17 unterdrückt. Ein weiteres schmalbandiges optisches Filter 24 kann zusätzlich vor der Primärlichtquelle 17 vorgesehen sein, um nur Primärlicht der für die Abtastung gewünschten Wellenlänge bzw. Wellenlängen durchzulassen.

Die rotationssymmetrische Geometrie der Leiteinrichtung 12, in deren Zentrum in vertikaler Projektion gesehen die optische Abtasteinrichtung angeordnet ist, führt zu einem äußerst kompakten Aufbau der Sortieranlage, welche gleichzeitig verteilt über den gesamten Umfang der Leiteinrichtung einen sehr hohen Massendurchsatz von zu sortierendem Schüttgut ermöglicht. Dabei können die einzelnen Speichersilos 11a bis 11h gleichzeitig mit unterschiedlichen Eingangsfraktionen an Recyclingmaterial beschickt werden. Alternativ kann natürlich auch nur ein einziges Silo vorgesehen sein, aus dem ein über den gesamten Umfang der Leiteinrichtung verteilter Materialstrom erzeugt und sortiert wird. Sind nun im Ausführungsbeispiel mehrere Speichersilos für unterschiedliche Eingangsfraktionen vorgesehen, so empfiehlt es sich, entlang der Leiteinrichtung vertikal verlaufende Trennstege (in den Figuren nicht gezeigt) vorzusehen, welche die einzelnen Materialfraktionen bzw. Materialströme auf ihrem Weg nach unten trennen und so eine Durchmischung der Materialströme zu vermeiden.

Durch die rotationssymmetrische Form der Leiteinrichtung wird ein besonders kompakter Aufbau der Sortieranlage ermöglicht. Gegenüber bekannten Sortieranlagen mit Förderband oder schiefer Ebene kann die Kapazität der Anlage bei gleicher Stellfläche etwa um einen Faktor von 8 gesteigert werden.

Die Geometrie der Leiteinrichtung 12 kann neben der hier gezeigten Form eines Kegelstumpfes eine beliebige andere sich nach unten hin aufweitende Form eines Rotationskörpers beispielsweise eine Glockenform oder eine bauchige Form aufweisen. Neben einer runden Querschnittsgeometrie kann im Rahmen der vorliegenden Erfindung auch eine von der kreisrunden Form abweichende Formgebung, beispielsweise ein polygonaler Querschnitt für die Leiteinrichtung 12 gewählt werden, so dass diese die Form eines Pyramidenstumpfes erhält. Als Pyramidenstumpf wird im Rahmen einer mathematischen Definition u.a. der Stumpf einer Pyramide mit polygonaler Grundfläche, beispielsweise der Grundfläche eines 8-Ecks verstanden, wobei es sich nicht zwingend im ein regelmäßiges Polygon handeln muss. Zudem können, in Abweichung von der mathematischen Definition einer Pyramide, im Rahmen der vorliegenden Erfindung die einzelnen Seiten des die Grundfläche bildenden "Polygons" mit einem gewissen Radius nach außen gewölbt sein.

Ebenso kann, auch wenn dies sich als weniger vorteilhaft erweist, von der kreisrunden Querschnittsform abgewichen und eine elliptische oder ovale Formgebung gewählt werden, die im Rahmen der vorliegenden Erfindung ebenfalls als Rotationskörper angesehen werden soll. Auch die Anordnung der optischen Abtasteinrichtung bzw. Rotationsscanners muss nicht zwingend genau im Zentrum der vertikalen Projektion der Leiteinrichtung liegen, wobei letzteres im Interesse eines bestmöglichen Messergebnisses vorzuziehen ist. Eine Leiteinrichtung 12 mit kreisrundem Querschnitt und in deren Zentrum angeordnetem Rotationsscanner ist jedoch im Rahmen der vorliegenden Erfindung bevorzugt, da so der abtastende Primärlichtstrahl auf die Kreislinie fokussiert werden kann, in der die Abtastebene den herabfallenden Materialstrom schneidet, und somit der Lichtweg für alle Drehwinkel des Rotationsscanners gleich lang und im Verhältnis zum Umfang minimal ist.

Die Leiteinrichtung 12 hat vorzugsweise eine um 360° geschlossene, sich nach unten hin aufweitende Form, so dass Materialströme über den vollen Umfang der Leiteinrichtung verteilt werden können. Im Rahmen der vorliegenden Erfindung ist es aber auch möglich, dass die Leiteinrichtung nicht vollständig geschlossen ist. Beispielsweise kann in der Leiteinrichtung ein Längsspalt verbleiben, welcher nicht zum Führen von Recyclinggut zur Verfügung steht. Im Rahmen der vorliegenden Erfindung soll sich die Leiteinrichtung daher um mindestens 180°, vorzugsweise mindestens 270°, höchstvorzugsweise jedoch um die vollen 360° erstrecken. Die optische Abtasteinrichtung befindet sich dabei in vertikaler Projektion im Inneren der gedachten, zu 360° ergänzten Grundfläche der Leiteinrichtung 12, wobei die Rotationsachse des Rotationsscanners vorzugsweise mit der Längsachse des gedachten, zu 360° ergänzten Rotationskörpers bzw. Pyramidenstumpfes übereinstimmt. Ebenfalls im Rahmen der vorliegenden Erfindung liegt die Verwendung einer Leiteinrichtung mit mehreren Abschnitten, beispielsweise zwei Abschnitten zu je 180°.

Als Primärlichtquelle 17 wird im Rahmen der vorliegenden Erfindung ein Laser bevorzugt. Dieser kann gepulst oder auch im Dauerstrichbetrieb mit einer oder auch mit mehreren Abtastwellenlängen betrieben werden. Alternativ kann auch eine in alle Raumrichtungen abstrahlende Lichtquelle, wie etwa eine Quecksilberdampflampe verwendet werden. In diesem Falle wird der Rotationsscanner nur benötigt, um das von den Bruchstücken remittierte Streulicht zum Spektrometer 18 zu leiten. Als fokussierende Optik 21 kann eine einzelne Kollimatorlinse oder ein entsprechendes Linsensystem verwendet werden. Ebenso wäre auch die Verwendung von sphärischen Spiegeln, beispielsweise einem Parabolspiegel als rotierenden Spiegel 19 möglich.

In dem Prozessspektrometer 18 wird das von den Bruchstücken emittierte und über den Drehspiegel 19 zurückreflektierte Streulicht spektral analysiert. Aufgrund des hierbei auftretenden charakteristischen Spektrums, welches einen optischen Fingerabdruck des jeweils gerade abgetasteten Bruchstücks darstellt, kann entschieden werden, ob es sich um ein "gutes" Bruchstück handelt, welches aus dem Materialstrom in den Sortierkanal für "Gutstoffe" geleitet werden soll, oder um ein "schlechtes" Bruchstück, welches in den Sortierkanal für "Schlechtstoffe" heraussortiert werden soll. In Abhängigkeit dieses Erkennungsergebnis steuert eine hier nicht gezeigte Steuerung an sich bekannter Bauart die Ventile der einzelnen Druckluftdüsen 14 so an, dass beispielsweise als "gut" erkannte Bruchstücke der gewünschten Materialfraktion durch gezielte Druckluftstöße in den radial außen liegenden Selektionskanal 15b abgelenkt werden, während als "schlecht" erkannte Bruchstücke in den Selektionskanal 15a fallen.

Auch wenn die Sortiereinrichtung im Ausführungsbeispiel in Zusammenhang mit der Sortierung von Kunststoffen und anderem Recyclinggut beschrieben wurde, ist ihre Verwendung nicht auf diesen Einsatzbereich beschränkt. Vielmehr können auch andere Gemische rieselfähigen Schüttgutes, beispielsweise im Lebensmittelbereich (Nüsse o.ä.) oder der Mineralogie (Sortierung von Mineralien) durch die Sortieranlage sortiert werden. Wenn hier also von zu sortierenden Bruchstücken die Rede ist, dann bezieht sich der Begriff Bruchstücke auf die einzelnen in dem Schüttgut enthaltenen stückigen Bestandteile.

## Patentansprüche

1. Vorrichtung zur Trennung einer oder mehrerer Materialfraktionen aus mindestens einem Materialstrom rieselfähigen Schüttgutes, vorzugsweise aus Bruchstücken (13) recyclingfähiger Kunststoffe,
- mit einer Leiteinrichtung (12), über die der Materialstrom unter Schwerkrafteinwirkung geführt wird,
- mit einer optischen Abtasteinrichtung (16) zur spektroskopischen Erkennung von zusammensetzungs- oder beschaffenheitsabhängigen Eigenschaften einzelner in dem Materialstrom enthaltener Bruchstücke (13), und
- mit einer Separationseinrichtung (14) zur mechanischen Separierung der einzelnen in dem Materialstrom enthaltenen Bruchstücke in Abhängigkeit von Erkennungsergebnissen der optischen Abtasteinrichtung (16),
wobei die Leiteinrichtung (12) als Mantelfläche eines sich nach unten hin aufweitenden Rotationskörpers oder Pyramidenstumpfes ausgebildet ist und die optische Abtasteinrichtung (16) eine in der axialen Projektion des Rotationskörpers oder Pyramidenstupfes innerhalb dessen Grundfläche angeordnete Lichtquelle (17) zur Erzeugung eines Lichtstrahls und ein rotierendes optisches Ablenkelement (19) aufweist, welches angeordnet ist, den Lichtstrahl derart abzulenken, dass dieser den über die Mantelfläche der Leiteinrichtung (12) verteilten Materialstrom in einer Abtastebene unterhalb des Rotationskörpers oder Pyramidenstumpfes schneidet, **dadurch gekennzeichnet, dass**
oberhalb der Leiteinrichtung (12) mehrere sektorförmige Silos (11a-11h) angeordnet sind, aus denen mehrere Materialströme über die Leiteinrichtung (12) geführt werden, und für jedes der Silos (11a-11h) unterhalb der Leiteinrichtung (12) zwei oder mehr entsprechende, auf unterschiedlichen Radien von der Achse des Rotationskörpers oder Pyramidenstumpfes angeordnete Selektionskanäle (15a, 15b) vorgesehen sind und
dass die Leiteinrichtung im Wesentlichen vertikal verlaufende Trennstege zur Trennung unterschiedlicher Materialströme auf ihrem Weg entlang der Leiteinrichtung (12) aufweist.

2. Vorrichtung nach Anspruch 1, bei der das rotierendes optisches Ablenkelement (19) angeordnet ist, den Lichtstrahl derart abzulenken, dass dieser den Materialstrom in einer zur Grundfläche des Rotationskörpers oder Pyramidenstumpfes parallelen Abtastebene schneidet.

3. Vorrichtung nach Anspruch 1 oder 2, bei der das optische Ablenkelement (19) um die Achse des Rotationskörpers oder Pyramidenstumpfes rotierend angeordnet ist, um den Lichtstrahl aus der Achse des Rotationskörpers oder Pyramidenstumpfes in die Abtastebene abzulenken.

4. Vorrichtung nach Anspruch 3, bei der die Einfallsrichtung des Lichtstrahls entlang der Achse des Rotationskörpers oder Pyramidenstumpfes verläuft und das optische Ablenkelement (19) gegenüber einer achsparallelen Richtung um etwa 45° geneigt ist, um den Lichtstrahl um etwa 90° in die Abtastebene abzulenken.

5. Vorrichtung nach einem der vorangehenden Ansprüche, bei der im Lichtweg zwischen Lichtquelle (17) und rotierendem optischem Ablenkelement (19) ein teildurchlässiger Spiegel (22) vorgesehen ist, welcher in Rückrichtung über das Ablenkelement (19) vom Materialstrom zurückgestrahltes Fluoreszenz- und Streulicht zu einer spektroskopischen Auswerteeinrichtung (18) ablenkt.

6. Vorrichtung nach einem der vorangehenden Ansprüche, bei der im Lichtweg eine optische Fokussiereinheit (21) vorgesehen ist, welche den Lichtstrahl auf eine Kreislinie fokussiert, in der dieser den Materialstrom schneidet.

7. Vorrichtung nach einem der vorangehenden Ansprüche, bei dem oberhalb der Leiteinrichtung (12) mindestens ein Silo (11a-11h) sowie ein dem Silo (11a-11h) zugeordneter Vibrationsförderer (11'), welcher angeordnet ist, um der Leiteinrichtung (12) Schüttgut aus dem Silo (11a-11h) zuzuführen.

8. Vorrichtung nach einem der vorangehenden Ansprüche, bei dem die Separationseinrichtung eine Vielzahl entlang einer Umfangslinie unterhalb der der Leiteinrichtung angeordnete, selektiv über entsprechende Ventile ansteurbare Druckluftdüsen (14) aufweist, um die einzelnen in dem Materialstrom enthaltenen Bruchstücke (13) mittels Druckluftstößen abzulenken.

9. Vorrichtung nach Anspruch 8, bei der entgegengesetzt gerichtete Druckluftdüsen (14) vor und hinter dem von der Leiteinrichtung (12) herunterfallenden Materialstrom angebracht sind, um durch Ablenkung in unterschiedliche Richtungen zwei oder mehr unterschiedliche Materialfraktionen gleichzeitig aus dem Materialstrom heraus zu sortieren.

10. Vorrichtung nach einem der vorangehenden Ansprüche, bei dem die optische Abtasteinrichtung (16) zur Erkennung und Unterscheidung von Bruchstücken (13) einer Teilchengröße bis 200 mm ausgebildet ist.

11. Vorrichtung nach einem der vorangehenden Ansprüche, bei der das rotierende optische Ablenkelement (19) einen Antrieb aufweist, welcher ausgebildet ist, das Ablenkelement (19) mit einer Frequenz vom mehr als 2000 Umdrehungen pro Minute, vorzugsweise mehr als 5.000 Umdrehungen pro Minute und höchstvorzugsweise mit einer Frequenz von bis zu 15.000 Umdrehungen pro Minute anzutreiben.

12. Verfahren zur Trennung einer oder mehrerer Materialfraktionen aus mindestens einem Materialstrom rieselfähigen Schüttgutes, vorzugsweise aus Bruchstücken (13) recyclingfähigen Kunststoffs, bei dem
- der Materialstrom unter Schwerkrafteinwirkung über eine Leiteinrichtung (12) geführt wird,
- der Materialstrom mittels einer optischen Abtasteinrichtung (16) zur spektrometrischen Erkennung von zusammensetzungs- oder beschaffenheitsabhängigen Eigenschaften einzelner in dem Materialstrom enthaltener Bruchstücke (13) abgetastet wird, und
- einzelne in dem Materialstrom enthaltenen Bruchstücke (13) in Abhängigkeit von Erkennungsergebnissen der optischen Abtasteinrichtung (16) mittels einer Separationseinrichtung (14) mechanisch separiert werden;
wobei die Leiteinrichtung (12) als Mantelfläche eines sich nach unten hin aufweitenden Rotationskörpers oder Pyramidenstumpfes ausgebildet ist, und die optische Abtasteinrichtung (16) eine in der axialen Projektion des Rotationskörpers oder Pyramidenstupfes innerhalb dessen Grundfläche angeordnete Lichtquelle (17) zur Erzeugung eines Lichtstrahls und ein rotierendes optisches Ablenkelement (19) aufweist, welches den Lichtstrahl derart ablenkt, dass dieser den über die Mantelfläche der Leiteinrichtung (12) verteilten Materialstrom in einer Abtastebene unterhalb des Rotationskörpers oder Pyramidenstumpfes schneidet,
**dadurch gekennzeichnet, dass**
oberhalb der Leiteinrichtung (12) mehrere sektorförmige Silos (11a-11h) angeordnet sind, aus denen mehrere Materialströme über die Leiteinrichtung (12) geführt werden, und für jedes der Silos (11a-11h) unterhalb der Leiteinrichtung (12) zwei oder mehr entsprechende, auf unterschiedlichen Radien von der Achse des Rotationskörpers oder Pyramidenstumpfes angeordnete Selektionskanäle (15a, 15b) vorgesehen sind und
dass die Leiteinrichtung im Wesentlichen vertikal verlaufende Trennstege zur Trennung unterschiedlicher Materialströme auf ihrem Weg entlang der Leiteinrichtung (12) aufweist.

## Claims

1. Apparatus for separating one or more material fractions from at least one material stream of flowable loose bulk material, preferably composed of fragments (13) of recyclable plastics,
- having a directing device (12) by way of which the material stream is guided under the action of gravity,
- having an optical scanning device (16) for spectroscopic identification of composition-dependent or nature-dependent properties of individual fragments (13) contained in the material stream, and
- having a separation device (14) for mechanical separation of the individual fragments contained in the material stream in dependence upon identification results of the optical scanning device (16),
wherein the directing device (12) is configured as the outer surface of a rotational solid or truncated pyramid that widens towards the bottom, and the optical scanning device (16) has a light source (17) for generating a light beam, which light source is arranged in the axial projection of the rotational solid or truncated pyramid within the base surface thereof, and a rotating optical deflecting element (19) which is arranged to deflect the light beam in such a way that the latter intersects the material stream that is distributed over the outer surface of the directing device (12) in a scanning plane below the rotational solid or truncated pyramid,
**characterised in that**
above the directing device (12) there are arranged a plurality of sector-shaped silos (11a-11h) from which a plurality of material streams are guided by way of the directing device (12), and for each of the silos (11a-11h) there are provided below the directing device (12) two or more corresponding selection channels (15a, 15b) arranged on different radii from the axis of the rotational solid or truncated pyramid, and
the directing device has substantially vertically extending separating bars for separating different material streams as they pass along the directing device (12).

2. Apparatus according to claim 1, wherein the rotating optical deflecting element (19) is arranged to deflect the light beam in such a way that the latter intersects the material stream in a scanning plane parallel to the base surface of the rotational solid or truncated pyramid.

3. Apparatus according to claim 1 or 2, wherein the optical deflecting element (19) is arranged to rotate about the axis of the rotational solid or truncated pyramid in order to deflect the light beam from the axis of the rotational solid or truncated pyramid into the scanning plane.

4. Apparatus according to claim 3, wherein the direction of incidence of the light beam runs along the axis of the rotational solid or truncated pyramid, and the optical deflecting element (19) is inclined with respect to an axially parallel direction by approximately 45° in order to deflect the light beam by approximately 90° into the scanning plane.

5. Apparatus according to any one of the preceding claims, wherein in the light path between the light source (17) and the rotating optical deflecting element (19) there is provided a semi-transparent reflector (22) which deflects fluorescent and scattered light that is beamed back from the material stream in the return direction via the deflecting element (19) to a spectroscopic analysis device (18).

6. Apparatus according to any one of the preceding claims, wherein in the light path there is provided an optical focusing unit (21) which focuses the light beam onto a circular line in which the light beam intersects the material stream.

7. Apparatus according to any one of the preceding claims, wherein above the directing device (12) there is arranged at least one silo (11a-11h) and a vibratory conveyor (11') assigned to the silo (11a-11h), which conveyor is arranged to supply the directing device (12) with loose bulk material from the silo (11a-11h).

8. Apparatus according to any one of the preceding claims, wherein the separation device has a multiplicity of compressed air nozzles (14), which are arranged along a circumferential line below the directing device and are controllable selectively via corresponding valves, in order to divert the individual fragments (13) contained in the material stream by means of pulses of compressed air.

9. Apparatus according to claim 8, wherein oppositely directed compressed air nozzles (14) are mounted in front of and behind the material stream falling downwards from the directing device (12) in order to separate out two or more different material fractions from the material stream simultaneously by diversion in different directions.

10. Apparatus according to any one of the preceding claims, wherein the optical scanning device (16) is configured for identifying and differentiating fragments (13) of a particle size up to 200 mm.

11. Apparatus according to any one of the preceding claims, wherein the rotating optical deflecting element (19) has a drive which is configured to drive the deflecting element (19) at a frequency of more than 2000 revolutions per minute, preferably more than 5000 revolutions per minute and most preferably at a frequency of up to 15,000 revolutions per minute.

12. Method for separating one or more material fractions from at least one material stream of flowable loose bulk material, preferably composed of fragments (13) of recyclable plastics, wherein
- the material stream is guided by way of a directing device (12) under the action of gravity,
- the material stream is scanned by means of an optical scanning device (16) for spectrometric identification of composition-dependent or nature-dependent properties of individual fragments (13) contained in the material stream, and
- individual fragments (13) contained in the material stream are mechanically separated by means of a separation device (14) in dependence upon identification results of the optical scanning device (16),
wherein the directing device (12) is configured as the outer surface of a rotational solid or truncated pyramid that widens towards the bottom, and the optical scanning device (16) has a light source (17) for generating a light beam, which light source is arranged in the axial projection of the rotational solid or truncated pyramid within the base surface thereof, and a rotating optical deflecting element (19) which deflects the light beam in such a way that the latter intersects the material stream that is distributed over the outer surface of the directing device (12) in a scanning plane below the rotational solid or truncated pyramid,
**characterised in that**
above the directing device (12) there are arranged a plurality of sector-shaped silos (11a-11h) from which a plurality of material streams are guided by way of the directing device (12), and for each of the silos (11a-11h) there are provided below the directing device (12) two or more corresponding selection channels (15a, 15b) arranged on different radii from the axis of the rotational solid or truncated pyramid, and
the directing device has substantially vertically extending separating bars for separating different material streams as they pass along the directing device (12).

## Revendications

1. Dispositif pour séparer une ou plusieurs fractions de matière d'au moins un flux de matière en vrac s'écoulant librement, de préférence composé de fragments (13) de matières plastiques recyclables,
- avec un moyen de guidage (12) par lequel le flux de matière est guidé sous l'action de la gravité,
- avec un moyen de balayage optique (16) pour la détection spectroscopique de propriétés dépendantes de la composition ou de la nature de fragments individuels (13) contenus dans le flux de matière, et
- avec un moyen de séparation (14) pour séparer mécaniquement les fragments individuels contenus dans le flux de matière en fonction des résultats de détection du moyen de balayage optique (16),
dans lequel le moyen de guidage (12) est réalisé sous la forme d'une surface latérale d'un corps de révolution ou d'un tronc de pyramide s'élargissant vers le bas et le moyen de balayage optique (16) présente une source de lumière (17) disposée dans la projection axiale du corps de révolution ou du tronc de pyramide à l'intérieur de sa surface de base pour générer un faisceau lumineux et un élément de déviation optique rotatif (19) qui est disposé pour dévier le faisceau lumineux de telle sorte qu'il croise le flux de matière réparti sur la surface latérale du moyen de guidage (12) dans un plan de balayage situé au-dessous du corps de révolution ou du tronc de pyramide,
**caractérisé en ce que**
plusieurs silos en forme de secteur (11a-11h) sont disposés au-dessus du moyen de guidage (12), à partir desquels plusieurs flux de matière sont guidés via le moyen de guidage (12), et pour chacun des silos (11a-11h) sont prévus, au-dessous du moyen de guidage (12), deux ou plusieurs canaux de sélection correspondants (15a, 15b) disposés sur différents rayons par rapport à l'axe du corps de révolution ou du tronc de pyramide, et
**que** le moyen de guidage présente des séparateurs s'étendant sensiblement verticalement pour séparer différents flux de matière lors de leur trajet le long du moyen de guidage (12).

2. Dispositif selon la revendication 1 dans lequel l'élément de déviation optique rotatif (19) est disposé pour dévier le faisceau lumineux de telle sorte qu'il croise le flux de matière dans un plan de balayage parallèle à la surface de base du corps de révolution ou du tronc de pyramide.

3. Dispositif selon la revendication 1 ou 2, dans lequel l'élément de déviation optique (19) est disposé pour tourner autour de l'axe du corps de révolution ou du tronc de pyramide pour dévier le faisceau lumineux de l'axe du corps de révolution ou du tronc de pyramide dans le plan de balayage.

4. Dispositif selon la revendication 3, dans lequel la direction d'incidence du faisceau lumineux s'étend le long de l'axe du corps de révolution ou du tronc de pyramide et l'élément de déviation optique (19) est incliné d'environ 45° par rapport à une direction parallèle à l'axe pour dévier le faisceau lumineux d'environ 90° dans le plan de balayage.

5. Dispositif selon l'une des revendications précédentes, dans lequel un miroir partiellement transparent (22) est prévu dans le trajet lumineux entre la source de lumière (17) et l'élément de déviation optique rotatif (19), lequel dévie la lumière de fluorescence et la lumière diffusée réfléchie en retour par le flux de matière via l'élément de déviation (19) vers un moyen d'évaluation spectroscopique (18).

6. Dispositif selon l'une des revendications précédentes, dans lequel une unité de focalisation optique (21) est prévue dans le trajet lumineux, laquelle focalise le faisceau lumineux sur une ligne circulaire dans laquelle celui-ci croise le flux de matière.

7. Dispositif selon l'une des revendications précédentes, dans lequel au moins un silo (11a-11h) ainsi qu'un convoyeur vibrant (11') associé au silo (11a-11h), lequel est disposé pour amener de la matière en vrac du silo (11a-11h) au moyen de guidage (12), sont disposés au-dessus du moyen de guidage (12).

8. Dispositif selon l'une des revendications précédentes, dans lequel le moyen de séparation présente une pluralité de buses à air comprimé (14) disposées le long d'une ligne périphérique au-dessous du moyen de guidage et pouvant être commandées sélectivement par l'intermédiaire de valves correspondantes afin de dévier les fragments individuels (13) contenus dans le flux de matière au moyen d'impulsions d'air comprimé.

9. Dispositif selon la revendication 8, dans lequel des buses à air comprimé (14) dirigées en sens inverse sont montées devant et derrière le flux de matière tombant du moyen de guidage (12) pour trier simultanément deux ou plusieurs fractions de matière différentes du flux de matière par déviation dans différentes directions.

10. Dispositif selon l'une des revendications précédentes, dans lequel le moyen de balayage optique (16) est réalisé pour détecter et distinguer des fragments (13) d'une taille de particule allant jusqu'à 200 mm.

11. Dispositif selon l'une des revendications précédentes, dans lequel l'élément de déviation optique rotatif (19) présente un entraînement qui est réalisé pour entraîner l'élément de déviation (19) à une fréquence supérieure à 2 000 tours par minute, de préférence supérieure à 5 000 tours par minute et plus préférentiellement à une fréquence allant jusqu'à 15 000 tours par minute.

12. Procédé pour séparer une ou plusieurs fractions de matière d'au moins un flux de matière en vrac s'écoulant librement, de préférence composé de fragments (13) de matière plastique recyclable, dans lequel
- le flux de matière est guidé sous l'action de la gravité par un moyen de guidage (12),
- le flux de matière est balayé à l'aide d'un moyen de balayage optique (16) pour la détection spectrométrique de propriétés dépendantes de la composition ou de la nature de fragments individuels (13) contenus dans le flux de matière, et
- des fragments individuels (13) contenus dans le flux de matière sont séparés mécaniquement à l'aide d'un moyen de séparation (14) en fonction des résultats de détection du moyen de balayage optique (16) ;
dans lequel le moyen de guidage (12) est réalisé sous la forme d'une surface latérale d'un corps de révolution ou d'un tronc de pyramide s'élargissant vers le bas et le moyen de balayage optique (16) présente une source de lumière (17) disposée dans la projection axiale du corps de révolution ou du tronc de pyramide à l'intérieur de sa surface de base pour générer un faisceau lumineux et un élément de déviation optique rotatif (19) qui dévie le faisceau lumineux de telle sorte qu'il croise le flux de matière réparti sur la surface latérale du moyen de guidage (12) dans un plan de balayage situé au-dessous du corps de révolution ou du tronc de pyramide,
**caractérisé en ce que**
plusieurs silos en forme de secteur (11a-11h) sont disposés au-dessus du moyen de guidage (12), à partir desquels plusieurs flux de matière sont guidés via le moyen de guidage (12), et pour chacun des silos (11a-11h) sont prévus, au-dessous du moyen de guidage (12), deux ou plusieurs canaux de sélection correspondants (15a, 15b) disposés sur différents rayons par rapport à l'axe du corps de révolution ou du tronc de pyramide, et
**que** le moyen de guidage présente des séparateurs s'étendant sensiblement verticalement pour séparer différents flux de matière lors de leur trajet le long du moyen de guidage (12).
